# EUROPÄISCHE PATENTSCHRIFT

(11) **EP 2 136 192 B1**
(45) Veröffentlichungstag und Bekanntmachung des Hinweises auf die Patenterteilung: **01.08.2012**
(21) Anmeldenummer: 08010976.2
(22) Anmeldetag: 17.06.2008
(51) Int. Cl.: G01L 5/00

(54) **Sensor-Befestigungsanordnung**
Sensor fixing assembly
Agencement de fixation de capteur

(43) Veröffentlichungstag der Anmeldung: 23.12.2009
(73) Patentinhaber: Hamilton Bonaduz AG, CH-7402 Bonaduz (CH)
(72) Erfinder: Furger, Karl, 7412 Scharans (CH)
(74) Vertreter: Trossin, Hans-Jürgen

(56) Entgegenhaltungen:
- EP-A- 0 260 337
- EP-A- 1 531 323
- DE-A1- 4 234 290
- DE-A1- 10 324 818
- DE-C1- 4 407 212

## Beschreibung

Die Erfindung betrifft eine Sensor-Befestigungsanordnung zur Befestigung eines Sensors an einer Messstelle gemäß dem Oberbegriff des Anspruchs 1.

In der Industrie ist es üblich, Sensoren einzusetzen, deren Signale beispielsweise zum Steuern und/oder Überwachen von automatisierten Fertigungs- und/oder Verarbeitungsanlagen verwendet werden. Zur Befestigung eines solchen Sensors an einer Messstelle, welche beispielsweise der Innenraum eines die Messstelle umgebenden Behältnisses ist, ist es bekannt, den Sensor mittels einer Sensoraufnahme zu befestigen, welche entweder direkt in eine zur Messstelle führende Durchgangsöffnung des Behältnisses eingeschweißt oder über einen sogenannten Prozessanschluss, beispielsweise in der Form einer Muffe, Kugel eines Verschlussstopfens oder eines scheibenförmigen Elements, an der Durchgangsöffnung fluiddicht befestigt wird. Solche Prozessanschlüsse für Sensoren haben in der Regel normierte Nennweiten, welche sich in aller Regel deutlich vom Durchmesser des an der Messstelle anzubringenden Sensors unterscheiden. Daher dient die Sensoraufnahme als Adapter zwischen einer bestimmten Art von Sensor und dem normierten Prozessanschluss.

Aus den DE 103 24 818 A1 und DE 44 07 212 C1 ist jeweils eine Sensor-Befestigungsanordnung mit einem darin eingesetzten Sensor bekannt, wobei zur Abdichtung des Innenraums der Sensoraufnahme gegenüber einem Medium im Innenraum eines Behältnisses zwischen die Sensoraufnahme und den eingesetzten Sensor eine Dichtung eingesetzt ist, welche über eine Spanneinrichtung in einen sich verjüngenden Zwischenraum zwischen dem Sensor und der Sensoraufnahme gedrückt wird, um einen Ringspalt zwischen dem Sensor und der Sensoraufnahme abzudichten und darüber hinaus den Sensor in der Sensoraufnahme festzulegen. Die offenbarte Spanneinrichtung besteht jedoch aus einer Vielzahl von Einzelteilen, die gleichzeitig mit dem Sensor in die Sensoraufnahme eingesetzt werden müssen, was zum einen die Montage des Sensors kompliziert macht und darüber hinaus die Gefahr birgt, dass bei der Montage Einzelteile verloren gehen.

Der Erfindung liegt die Aufgabe zugrunde, eine Sensor-Befestigungsanordnung bereitzustellen, welche eine einfache und schnelle Montage eines Sensors an einer Messstelle erlaubt.

Erfindungsgemäß wird diese Aufgabe gelöst durch eine Sensor-Befestigungsanordnung, umfassend eine Sensoraufnahme zur Aufnahme und Führung eines Sensors, welche einen zu einer Prozessöffnung bzw. Sensoraufnahmeöffnung führenden, in einer axialen Richtung verlaufenden Sensoraufnahmekanal bereitstellt, einen in die Sensoraufnahmeöffnung einsetzbaren Sensor, ein Spannmittel, welches verlagerbar ist zwischen einer Spannstellung und einer Entspannungsstellung, wobei die Sensoraufnahme, das Spannmittel und ein in die Sensoraufnahme eingesetzter Sensor im fertig montierten Zustand der Sensor-Befestigungsanordnung einen den Sensor radial außen umgebenden Dichtungsaufnahmeraum definieren mit einem sensoraufnahmeöffnungsnäheren Abschnitt kleinerer radialer Spaltweite und einem sensoraufnahmeöffnungsferneren Abschnitt größerer radialer Spaltweite, sowie einen durch das Spannmittel verformbaren Dichtungsring, welcher in dem Dichtungsaufnahmeraum angeordnet ist, und welcher sich dann, wenn sich das Spannmittel in der Spannstellung befindet, weiter in den sensoraufnahmeöffnungsnäheren Abschnitt erstreckt, als dann, wenn sich das Spannmittel in der Entspannungsstellung befindet, wobei sich die Sensor-Befestigungsanordnung dadurch auszeichnet, dass das Spannmittel mit einer separaten Spannvorrichtung in Eingriff bringbar ist, durch die das Spannmittel von der Entspannungsstellung in die Spannstellung verlagerbar ist, und dass ein Bauteil aus Spannmittel und Sensoraufnahme ein Haltemittel aufweist, welches im Zusammenwirken mit einem/einer am jeweils anderen Bauteil ausgebildeten Gegenhaltemittel oder Reibfläche das Spannmittel, vorzugsweise lösbar, in der Entspannungsstellung unverlierbar an der Sensoraufnahme hält.

Grundidee der Erfindung ist es dabei, alle zur fluiddichten Montage des Sensors notwendigen Einzelteile, d.h. wenigstens den Dichtungsring und das den Dichtungsring verformende Spannmittel bereits vormontiert und Dank des Haltemittels unverlierbar in der Sensoraufnahme in einer Entspannungsstellung anzuordnen, in welcher der Sensor ohne Kraftaufwand in die Sensoraufnahme einsetzbar ist, so dass es bei der Montage des Sensors (vor oder nach der Befestigung der Sensoraufnahme an einer zur Messstelle führenden Öffnung) lediglich notwendig ist, diesen in die entspannte Sensor-Befestigungsanordnung einzuschieben und im Anschluss daran den Dichtungsaufnahmeraum, welcher den Sensor umgibt, abzudichten, indem das Spannmittel mittels der separaten Spannvorrichtung von der Entspannungsstellung in die Spannstellung verlagert wird, was den Dichtungsring in den Dichtungsaufnahmeraum presst.

Um eine leichte Montage und Demontage des Spannmittels ggf. von Hand und ohne Werkzeug zu ermöglichen, kann weiterhin vorgesehen sein, dass ein Bauteil aus Spannmittel und Sensoraufnahme mit einem in radialer Richtung vorstehenden elastischen Halteelement als das Haltemittel versehen ist zum Verrastungseingriff in eine am jeweils anderen Bauteil ausgebildete Vertiefung als das Gegenhaltemittel, wobei das in radialer Richtung vorstehende elastische Halteelement beispielsweise ein Federelement, insbesondere Blattfederelement, sein kann. Alternativ kann jedoch auch vorgesehen sein, dass das zum Reibungseingriff mit der Reibfläche bestimmte Haltemittel von einem ringförmigen, vorzugsweise elastischen Halteelement gebildet ist und/oder dass ein Bauteil aus Spannmittel und Sensoraufnahme mit einer radialen Vertiefung versehen ist, in welcher ein in radialer Richtung vorstehendes, insbesondere ringförmiges Halteelement als das Haltemittel vorgesehen ist zum Reibungseingriff mit der am jeweils anderen Bauteil ausgebildeten Reibfläche, wobei in Bezug auf ringförmige Halteelemente oder Haltemittel vor allem an elastische Halteelemente aus Kunststoff oder Gummi, wie z.B. O-Ringe, gedacht wird. Es soll jedoch nicht ausgeschlossen sein, dass bei Bedarf auch andere ringförmige Halteelemente, beispielsweise aus Metall, wie z. B. ein Spannring, einsetzbar sind.

Um eine Verlagerung des Spannmittels zwischen der Entspannungsstellung und der Spannstellung bei eingerastetem Haltemittel zu ermöglichen, kann weiterhin vorgesehen sein, dass die radiale Vertiefung in axialer Richtung verlängert ausgebildet ist. Die radiale Vertiefung kann zum einen ringförmig ausgebildet sein oder auch - insbesondere bei Verwendung eines Blattfederelements von einzelnen, in Längsrichtung des Spannelements verlaufenden Nuten gebildet sein, wodurch auch ein Verdrehen des Spannmittels bei seiner Verlagerung in die Spannstellung verhindert werden kann. Wenn die radiale Vertiefung in axialer Richtung verlängert ausgebildet ist, ermöglicht dies ein Spiel des Spannmittels in der Sensoraufnahme in der Entspannungsstellung und sorgt ferner dafür, dass das Spannmittel bei nicht montiertem Sensor entspannt vorliegt, ohne die Dichtung zu verpressen, wodurch der Sensor ohne wesentlichen Reibungswiderstand des Dichtungsrings eingeführt werden kann. Erwähnt sei diesbezüglich auch die Möglichkeit, insbesondere bei der Verwendung eines ringförmigen Halteelements, beispielsweise eines O-Rings, welcher das Spannmittel umschließt, sowohl das Spannmittel als auch die Sensoraufnahme jeweils mit einer radialen Vertiefung auszubilden, in denen das ringförmige Halteelement angeordnet ist. In diesem Fall wäre es sogar möglich, die radialen Vertiefungen verkürzt auszuführen, da infolge der beidseitigen Anordnung der radialen Vertiefungen bei einer Verschiebung des Spannmittels in der Sensoraufnahme eine Überlappung der Vertiefungen möglich wäre. Weiterhin denkbar wäre es auch, ein elastisches Haltemittel auszubilden, welches aus einem anderen und elastischeren Material besteht wie das Spannmittel und die Sensoraufnahme, wie z.B. einem an das Spannmittel oder die Sensoraufnahme angeformten Gummiwulst.

Die Spannvorrichtung kann vom Sensor getragen sein, was beispielsweise dadurch erreichbar ist, dass die Spannvorrichtung einen gemeinsam mit dem Sensor, insbesondere axial, bewegbaren Anschlag umfasst, welcher mit einem am Spannmittel vorgesehenen Gegenanschlag in Eingriff bringbar ist. Der Anschlag kann dabei zum einen als Teil des Sensors, beispielsweise als Stufe am Außenumfang des Sensors vorgesehen sein oder alternativ in der Form eines um den Außenumfang des Sensors herum beweglichen Elements, z.B. eines Schraubelements, welches gemeinsam mit dem Sensor bewegbar ist, so dass Feinpositionierungen des Spannmittels möglich sind.

Darüber hinaus kann jedoch auch vorgesehen sein, dass der Sensor, vorzugsweise in seinem sensoraufnahmeöffnungsfernen Endbereich, mit einer Eingriffsausbildung, insbesondere mit einem Gewinde- oder Bajonettverschluss, versehen ist zum Eingriff mit einer an der Sensoraufnahme, insbesondere der Führung, ausgebildeten Gegeneingriffsausnehmung. Die Eingriffsausbildung kann starr mit dem Sensor verbunden sein. Darüber hinaus kann jedoch auch vorgesehen sein, dass die Eingriffsausbildung, insbesondere das Gewinde oder der Bajonettverschluss, des Sensors oder/und der mit dem Sensor bewegbare Anschlag an einem an dem Sensor drehbar gelagerten Ringelement vorgesehen ist, wobei in diesem Fall weiterhin vorgesehen sein kann, dass die Eingriffsausbildung die Spannvorrichtung bildet, durch die das Spannmittel von der Entspannungsstellung in die Spannstellung verlagerbar ist, was den Vorteil hätte, dass bei der Montage des Sensors keine Verdrehung des Sensors bezüglich der Sensoraufnahme und des Spannmittels erfolgt und dennoch bei der Montage des Sensors gleichzeitig das Spannmittel in die Spannstellung verlagert werden kann, ohne eine zusätzliche, separate Spannvorrichtung vorsehen zu müssen. Dies hätte auch den Vorteil, dass bei der Montage des Sensors lediglich zwei Baugruppen verwendet werden müssen, nämlich zum einen die vormontierte Sensor-Befestigungsanordnung bestehend aus der Sensoraufnahme, dem darin eingesetzten Dichtungsring und dem in der Entspannungsstellung befindlichen Spannmittel und zum anderen der Sensor mit der daran angebrachten Spannvorrichtung.

Um eine exakte oder/und spielfreie Führung des Spannmittels oder/und des Sensors in der Sensoraufnahme unabhängig von der Drehstellung zu ermöglichen, kann weiterhin vorgesehen sein, dass das Spannmittel ein rohrförmiges Element ist, es soll jedoch nicht ausgeschlossen sein, dass das Spannmittel eine beliebige andere Form hat, solang wenigstens der an dem Dichtungsring anliegende Bereich des Spannmittels rohrförmig oder ringförmig ausgebildet ist, um eine gleichmäßige Druckverteilung auf den Dichtungsring zu ermöglichen.

Das rohrförmige Element kann beispielsweise einteilig ausgebildet sein, was Vorteile hinsichtlich der Passgenauigkeit hat (insbesondere bei Temperaturschwankungen) insbesondere dann, wenn das Spannmittel und die Sensoraufnahme aus demselben Material hergestellt sind und daher denselben Wärmeausdehnungskoeffizienten aufweisen, jedoch kann es aus Gründen der Einfachheit und der Elastizität bevorzugt sein, das rohrförmige Element wenigstens zweiteilig auszubilden mit einem sensoraufnahmeöffnungsnäheren ersten Rohrteil und einem sensoraufnahmeöffnungsferneren zweiten Rohrteil, welches an ein sensoraufnahmeöffnungsferneres Ende des ersten Rohrteils in Anlage bringbar ist.

Wie bereits angesprochen, kann das rohrförmige Element und die Sensoraufnahme unter Verwendung desselben Materials, insbesondere von Metall, gebildet sein, was natürlich auch dann möglich ist, wenn das rohrförmige Element zweiteilig ausgebildet ist, jedoch ist gemäß einer bevorzugten Ausführungsform das erste Rohrteil und die Sensoraufnahme unter Verwendung desselben Materials, insbesondere aus Metall, gebildet, was die Passgenauigkeit bei unterschiedlichen Temperaturen gewährleistet und eine exakte Anlage des ersten Rohrteils an dem Dichtungsring sicherstellt, und das zweite Rohrteil ist aus Gründen der Elastizität oder aus Fertigungsgründen im Wesentlichen aus Kunststoff gebildet.

Die Ausbildung des hinteren Rohrteils aus Kunststoff hat darüber hinaus den Vorteil, dass das Spannmittel leicht montiert werden kann, da das zweite Rohrteil, an welchem das elastische Halteelement ausgebildet ist, einfach durch Zusammendrücken des elastischen Halteelements von Hand montiert werden kann und sich das elastische Halteelement nach dem Einschieben in die Sensoraufnahme selbsttätig entspannt und das Spannmittel in der Sensoraufnahme verankert, so dass es bei einem Kippen der Sensoraufnahme nicht verloren gehen kann. Das Spannmittel kann auch durch einen radial aufgesetzten O-Ring aufgrund der Reibung zur Führung gegen ein unbeabsichtigtes Herausrutschen aus der Führung gegesichert sein. Darüber hinaus ist es dann, wenn das erste Rohrteil aus Metall gebildet ist und das zweite Rohrteil im Wesentlichen aus Kunststoff gebildet ist, im Gegensatz zu dem Fall, in dem das gesamte Spannmittel aus Kunststoff besteht, möglich, das Spannmittel leichter wieder aus der Sensoraufnahme zu entfernen, da durch eine stärkere Bewegung des schwereren ersten Rohrteils aus Metall das zweite Rohrteil aus Kunststoff wieder demontiert werden kann, ohne mit einem Hilfsmittel ins Innere der Sensoraufnahme eingreifen zu müssen.

Weiterhin kann vorgesehen sein, dass der sensoraufnahmeöffnungsfernere Abschnitt und der sensoraufnahmeöffnungsnähere Abschnitt des Dichtungsaufnahmeraums bei Annäherung an die Sensoraufnahmeöffnung unter Bildung einer radialen Stufe ineinander übergehen. Diese Stufe bzw. der Dichtungsaufnahmeraum kann beliebig geformt sein, solang sichergestellt ist, dass der Dichtungsring eine ausreichende Abdichtung des Zwischenraums zwischen der Sensoraufnahme und dem Sensor erreicht, wenn sich das Spannmittel in der Spannstellung befindet, jedoch ist bevorzugt vorgesehen, dass der Dichtungsaufnahmeraum rotationssymmetrisch ausgebildet ist und bei Betrachtung seines die Rotationssymmetrieachse enthaltenden Querschnitts wenigstens drei in axialer Richtung aufeinander folgende Abschnitte umfasst, einen dem ersten Abschnitt kleinerer radialer Spannweite zugeordneten ersten Abschnitt, einen dem Abschnitt größerer radialer Spannweite zugeordneten weiteren Abschnitt und einen einem Übergangsbereich zwischen dem ersten und dem weiteren Abschnitt zugeordneten Übergangsabschnitt, wo eine an die Kontur der radialen Stufe angelegte Tangente im ersten und im weiteren Abschnitt eine geringere Neigung bezüglich der Rotationssymmetrieachse hat als im Übergangsabschnitt.

Um ein reibungsfreies Einführen des Sensors in die Sensoraufnahme bei entspanntem Spannmittel zu gewährleisten, wird weiterhin vorgeschlagen, dass sich der Dichtungsring dann, wenn sich das Spannmittel in der Entspannungsstellung befindet, im unverformten Zustand befindet, was beispielsweise dadurch erreicht werden kann, dass ein sensoraufnahmeöffnungsfernerer Abschnitt des Dichtungsraums, insbesondere ein sensoraufnahmeöffnungsferner Abschnitt des Übergangsabschnitts, im Wesentlichen der Kontur eines unverformten Dichtungsrings entspricht, was ferner eine definierte Stellung des Dichtungsrings im entspannten Zustand des Spannmittels sicherstellt, ohne dass sich dieser beim Einschieben des Sensors verkantet und dadurch die Montage behindert. Diesbezüglich kann weiterhin vorgesehen sein, dass der Dichtungsring im unverformten Zustand an dem sensoraufnahmeöffnungsferneren Ende der radialen Stufe und/oder einem sensoraufnahmeöffnungsnahen Ende des Spannmittels anliegt, wenn sich das Spannmittel in der Entspannungsstellung befindet, was sowohl eine Verschiebung des Dichtungsrings und damit ein Blockieren des Sensors bei seiner Bewegung in seiner Achsrichtung verhindert, wenn er in die Sensoraufnahme und durch den Dichtungsring eingeführt und/oder aus der Sensoraufnahme herausgezogen wird, da der Dichtungsring in seiner entspannten Stellung anliegt, als auch sicherstellt, dass der Dichtungsring - auch ohne Sensor - sicher in der Sensoraufnahme gehalten ist und nicht verloren gehen kann.

Das Einführen und Entfernen des Sensors kann darüber hinaus erleichtert werden, wenn der Innendurchmesser des Dichtungsrings im unverformten Zustand größer als der Außendurchmesser eines den Dichtungsring durchwandernden Abschnitts des Sensors ist.

Um die Sensor-Befestigungsanordnung auch im Bereich der Biotechnologie und Lebensmittelindustrie einsetzen zu können, in welchem hohe Anforderungen an die Hygiene gestellt werden, kann weiterhin vorgesehen sein, dass der Dichtungsring dann, wenn sich das Spannmittel in der Spannstellung befindet, durch die Sensoraufnahme, das Spannmittel und den in die Sensoraufnahme eingesetzten Sensor verformt ist und den Dichtungsaufnahmeraum vollständig ausfüllt, so dass zum Messbereich kein Spalt verbleibt, in welchem sich Elemente, insbesondere lebende Zellen oder andere Verunreinigungen anlagern können.

Wenn darüber hinaus die radiale Breite des Dichtungsrings im unverformten Zustand größer ist als die radiale Spaltweite am sensoraufnahmeöffnungsnäheren Ende des ringförmigen Dichtungsaufnahmeraums, bewirkt dies zusätzlich zu einer sicheren Abdichtung des Dichtungsaufnahmeraums und einer stabilen Lagerung des Sensors ein seinem sensoraufnahmeöffnungsnahen Ende eine Vorspannung des Spannmittels in seine Entspannungsstellung, was beim Lösen der Spannvorrichtung zu einer gleichzeitigen Ausschubbewegung des Dichtungsrings aus dem sensoraufnahmeöffnungsnäheren Ende des ringförmigen Dichtungsaufnahmeraums und damit des Spannmittels in seine Entspannungsstellung unter ggf. gleichzeitiger Verlagerung des Sensors führt.

Weiterhin kann vorgesehen sein, dass sich das sensoraufnahmeöffnungsnahe Ende des Spannmittels zur Sensoraufnahmeöffnung hin verjüngt, was gewährleistet, dass der in der Enspannungsstellung befindliche Dichtungsring zwischen dem sensoraufnahmeöffnungsferneren Ende der radialen Stufe und dem sensoraufnahmeöffnungsnahen Ende des Spannmittels auch dann festgelegt ist, wenn sich das Spannmittel in der Entspannungsstellung befindet und der Sensor aus der Sensoraufnahme herausgezogen ist, so dass der Dichtungsring unverlierbar in der Sensoraufnahme gehalten ist. Darüber hinaus wird durch die Verjüngung des sensoraufnahmeöffnungsnahen Endes des Spannmittels zur Sensoraufnahmeöffnung hin, insbesondere in Verbindung mit der vorangehend erwähnten radialen Stufe, welche sich ebenfalls zur Sensoraufnahmeöffnung hin verjüngt, der Dichtungsring nicht nur geradlinig in den ringförmigen Dichtungsaufnahmeraum hinein gequetscht, was zu einer erhöhten Reibung zwischen dem Dichtungsring und dem Sensor einerseits und der Sensoraufnahme andererseits führen würde, sondern der Dichtungsring unterliegt einer definierten Verformung z.B. Abflachung, bevor dieser in den Dichtungsaufnahmeraum gepresst wird. Diese Eigenschaft kann insbesondere dann erzielt werden, wenn das Spannmittel zumindest in seinem sensoraufnahmeöffnungsnahen Bereich rotationssymmetrisch ausgebildet ist und sich die Neigung seiner Kontur bei Betrachtung eines die Spannmittel-Rotationssymmetrieachse enthaltenden Schnitts zumindest abschnittsweise um nicht mehr als 10°, vorzugsweise nicht mehr als 5° von der Neigung des Übergangsabschnitts unterscheidet, höchstvorzugsweise dieser entspricht.

Um eine definierte und reproduzierbare Formgebung des gespannten Dichtungsrings bei jedem Spannvorgang sicherzustellen, kann darüber hinaus vorgesehen sein, dass das Spannmittel in seinem sensoraufnahmeöffnungsnahen Endbereich mit einem festen oder verstellbaren Anschlag zur Anlage an einem mit der Sensoraufnahme fest oder verstellbar verbundenen Gegenanschlag versehen ist, wodurch zum einen eine definierte Endstellung des Spannmittels gewährleistet ist, d. h. der Dichtungsring kann nicht so weit in den Dichtungsaufnahmeraum hineingepresst werden, dass dieser an der Sensoraufnahmeöffnung zwischen der Sensoraufnahme und dem Sensor herausquillt, und zum anderen gewährleistet ist, dass der Dichtungsring lediglich so weit verpresst wird, dass er beim Lösen des Spannmittels selbständig aus dem sensoraufnahmeöffnungsnäheren Abschnitt kleinerer radialer Spaltweite des Dichtungsaufnahmeraums in den sensoraufnahmeöffnungsferneren Abschnitt größerer radialer Spaltweite zurückkehrt und ggf. gleichzeitig auch das Spannmittel aus der Sensoraufnahme herausschiebt, zumindest so weit es das Haltemittel bzw. das Gegenhaltemittel erlaubt.

Weiterhin kann vorgesehen sein, dass der Anschlag des Spannmittels von einem gesonderten, insbesondere ringförmigen Element gebildet ist, welches mit dem sensoraufnahmeöffnungsnahen Endbereich des Spannmittels, vorzugsweise lösbar und/oder in Axialrichtung verschiebbar, verbunden ist.

Der eigentliche Zweck dieses ringförmigen Elements liegt jedoch nicht in seiner Funktion als Anschlag des Spannmittels sondern vor allem als Hilfe, um das Einführen und Entfernen des Dichtungsrings zu erleichtern, wobei diesbezüglich vorgesehen sein, dass das ringförmige Element an seinem sensoraufnahmeöffnungsnahen Ende mit einem radial nach innen vorstehenden, vorzugsweise ringförmigen Vorsprung versehen ist, welcher den im Dichtungsraum anzuordnenden Dichtungsring selbst bei Axialbewegungen des Spannmittels weg von der Sensoraufnahme unverlierbar am Spannmittel hält. Dieser radial nach innen vorstehende Vorsprung erlaubt darüber hinaus im Zusammenwirken mit einem sensoraufnahmeöffnungsnahen Ende des Spannmittels eine exakte Positionierung des Dichtungsrings an der Innenseite des ringförmigen Elements und damit exakte Ausrichtung bezüglich der Sensoraufnahmeöffnung unmittelbar vor dem Einpressen des Dichtungsrings in den Dichtungsaufnahmeraum.

Zusätzlich oder Alternativ kann jedoch auch vorgesehen sein, dass das ringförmige Element in seinem sensoraufnahmeöffnungsnahen Bereich an seiner radial nach innen gewandten Seite mit einer, vorzugsweise ringförmigen radialen Vertiefung zur Aufnahme eines radial äußeren Bereichs des Dichtungsrings versehen ist, um auf diese Weise auch ohne eine direkte Anlage des Dichtungsrings an dem Vorsprung oder dem sensoraufnahmeöffnungsnahen Ende des Spannmittels eine exakte Positionierung des Dichtungsrings an der Innenseite des ringförmigen Elements zu gewährleisten.

Um die lösbare und in Axialrichtung verschiebbare Verbindung zwischen dem ringförmigen Element und dem Spannmittel zu ermöglichen, kann weiterhin vorgesehen sein, dass ein Bauteil aus ringförmigen Element und Spannmittel ein Haltemittel aufweist, welches im Zusammenwirken mit einer am jeweils anderen Element ausgebildeten Reibfläche das ringförmige Element, vorzugsweise lösbar, und axial verschiebbar unverlierbar an dem Spannmittel hält. Hierfür kann beispielsweise in einer radial nach außen zu dem ringförmigen Element weisenden Umfangsfläche des Spannmittels eine Außenumfangsnut vorgesehen ist, in welche ein Spannring eingesetzt ist, welcher unter Vorspannung an eine Innenumfangsfläche des ringförmigen Elements anliegt, wobei die Außenumfangsnut in axialer Richtung derart bemessen ist, dass ein gewisses Spiel des ringförmigen Elements ermöglicht wird, um so die Bewegung des Spannmittels bezüglich des ringförmigen Elements zwischen einer Entspannungsstellung des Spannmittels und der Spannstellung des Spannmittels ohne gleichzeitige Bewegung des ringförmigen Elements in axialer Richtung zu erlauben. Ferner ermöglicht es eine lösbare Verbindung zwischen dem Spannmittel und dem ringförmigen Element, den innerhalb des ringförmigen Elements angeordneten Dichtungsring in einfacher Weise zu wechseln, einzusetzen oder zu entfernen, wenn das ringförmige Element vorher vom Spannmittel getrennt wird, und darüber hinaus das ringförmige Element samt Dichtungsring-Sitz und Dichtungsring weitaus besser zu reinigen, welche sich an der Hygiene-technisch kritischsten Stelle der Sensoraufnahme befinden.

Weiterhin kann vorgesehen sein, dass die Sensoraufnahme eine, vorzugsweise scheibenförmige Halterung und eine an der Halterung vorgesehene Führung umfasst und dass der sensoraufnahmeöffnungsnähere Abschnitt mit kleinerer radialer Spaltweite in der Halterung ausgebildet ist. Die scheibenförmige Halterung, welche beispielsweise vom Varivent-Typ oder Clamp-Typ sein kann, dient dazu, die Führung, welche als Adapter zwischen der normierten Halterung und einem bestimmten Sensor, d. h. einem Sensor mit bestimmten Abmessungen, an einer Durchgangsöffnung eines die Messstelle umgebenden Behältnisses anzubringen. Alternativ zu scheibenförmigen Halterungen sind jedoch auch muffenförmige, kugelförmige, verschlussstopfenförmige, kegelförmige und sonstige Prozessanschlüsse denkbar, welche üblicherweise zur Anbringung eines Sensors an einer Messstelle dienen.

Um einen sicheren Halt des Sensors in der Führung sicherzustellen, kann weiterhin vorgesehen sein, dass im fertig montierten Zustand der Sensor-Befestigungsanordnung die Führung den Sensor und das Spannmittel zumindest abschnittsweise radial außen umgibt. Dabei können die Halterung und die Führung beispielsweise durch Schweißen integral miteinander verbunden sein oder die Führung kann in eine Aufnahme der Halterung eingefügt, insbesondere eingepresst oder eingeklebt sein. Um eine leichte Montage oder Demontage zu ermöglichen, kann jedoch auch vorgesehen sein, dass die Halterung und die Führung lösbar, beispielsweise durch eine Verschraubung, aneinander befestigt sind.

Wie bereits angesprochen, kann die Halterung integral mit einer Sensorbefestigungsanordnung eines die Messstelle umgebenden Behältnisses verbunden sein, insbesondere von dessen Wand gebildet sein, was zwar eine besonders kostengünstige Montage des Sensors ermöglicht, jedoch den Nachteil hat, dass die Sensoraufnahme dann nicht mehr für andere Zwecke verwendet werden kann und bei einer Beschädigung der Austausch kompliziert ist. Darüber hinaus gestaltet es diese Anordnung schwieriger, beispielsweise die radiale Stufe am sensoraufnahmeöffnungsnäheren Ende des ringförmigen Dichtungsaufnahmeraums auszubilden, wenn die radiale Stufe nicht in der Führung, sondern der Halterung bzw. der Wand des Behältnisses ausgebildet werden soll.

Weiterhin kann vorgesehen sein, dass das Spannmittel gemeinsam mit dem Sensor bewegbar ist, insbesondere axial bewegbar ist, was sich beispielsweise ergibt, wenn die separate Spannvorrichtung an dem Sensor angeordnet ist. Dies beinhaltet auch eine Ausgestaltung, bei welcher das Spannmittel integral am Sensor ausgebildet ist, beispielsweise in der Form eines Flansches, welcher auf den Dichtungsring drückt. Alternativ kann jedoch auch vorgesehen sein, dass das Spannmittel gesondert vom Sensor ausgebildet ist, beispielsweise in der Form eines Spannrings, welcher über einen Anschlag am Sensor oder unmittelbar über eine separate Spannvorrichtung verlagerbar ist.

Weiterhin kann vorgesehen sein, dass der Dichtungsring ein O-Ring ist, welcher kostengünstig in beliebigen Abmessungen angeboten wird und sich im Bereich der Dichtungstechnik als vielseitig einsetzbar erwiesen hat. Es soll jedoch nicht ausgeschlossen sein, dass anstelle eines O-Rings ein rechteckförmiger oder dreieckförmiger oder sonstwie gestalteter Dichtungsring verwendet wird.

Um ein leichtes Einsetzen des Sensors zu gewährleisten, wird weiterhin vorgeschlagen, dass der Sensor längs einer im Wesentlichen geradlinigen Einsetzachse in die Sensor-Befestigungsanordnung einsetzbar ist und dass der Sensor zumindest abschnittsweise rotationssymmetrisch ausgebildet ist.

Der Sensor kann beispielsweise ein Druck- oder Temperatursensor sein, jedoch ist die erfindungsgemäße Sensor-Befestigungsanordnung bevorzugt für Sensoren zur Messung von chemischen, biochemischen oder elektrochemischen Eigenschaften von Flüssigkeiten geeignet, insbesondere für pH-Sensoren, pO₂-Sensoren, pCO₂-Sensoren oder Sensoren zur Bestimmung der Konzentration von Ionen, in Enzymen oder biochemischen Metaboliten.

Ausführungsformen der Erfindung werden im Folgenden unter Bezugnahme auf die beiliegenden Figuren näher erläutert. Es stellen dar:
- Fig. 1: einen Querschnitt durch eine Sensor-Befestigungsanordnung mit eingesetztem Sensor gemäß einer ersten Ausführungsform der Erfindung;
- Fig. 2: eine perspektivische Darstellung der Sensor-Befestigungsanordnung gemäß Fig. 1 mit eingesetztem Sensor,
- Fig. 3: eine Querschnittsansicht entsprechend Fig. 1 der Sensor-Befestigungsanordnung ohne Sensor;
- Fig. 4: eine vergrößerte Ansicht eines Abschnitts B von Fig. 3;
- Fig. 5: eine perspektivische Darstellung der Sensor-Befestigungsanordnung gemäß Fig. 3;
- Fig. 6: einen Querschnitt entsprechend Fig. 1 durch eine Sensor-Befestigungsanordnung gemäß einer zweiten Ausführungsform der Erfindung;
- Fig. 7: eine perspektivische Explosionsdarstellung einer Sensorbefestigungsanordnung ohne Sensor gemäß einer dritten Ausführungsform der Erfindung;
- Fig. 8: einen Querschnitt durch die Sensorbefestigungsanordnung der Fig. 7 mit eingesetztem Sensor;
- Fig. 9: eine Ansicht der Fig. 8 in Richtung eines Pfeil IX unter Verwendung einer anderen Art von Sensor; und
- Fig. 10: eine vergrößerte Ansicht eines Abschnitts C von Fig. 9.

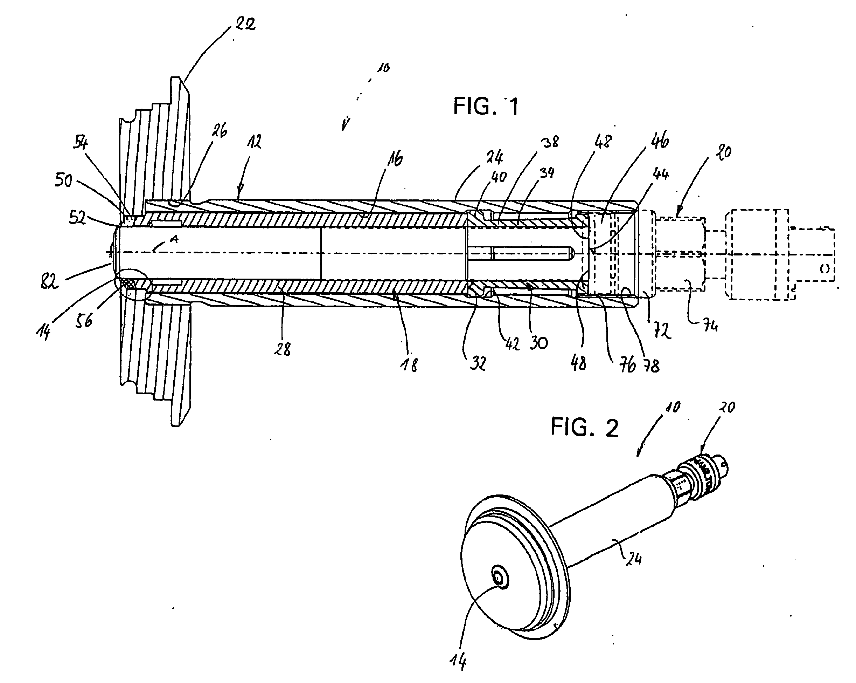

Fig. 1 zeigt eine Querschnittsansicht einer allgemein mit 10 bezeichneten erfindungsgemäßen Sensor-Befestigungsanordnung zur Anbringung eines Sensors an einem eine Messstelle umgebenden Behältnis gemäß einer ersten Ausführungsform der Erfindung.

Die Sensor-Befestigungsanordnung 10 umfasst eine im wesentlichen zylindrische Sensoraufnahme 12, welche einen zu einer Prozessöffnung bzw. Sensoraufnahmeöffnung 14 führenden, in einer axialen Richtung verlaufenden Sensoraufnahmekanal 16 bereitstellt, in den ein rohrförmiges Spannelement (Spannmittel) 18 eingesetzt ist, in welches wiederum ein Sensors 20 (siehe Fig. 1) einsetzbar ist.

Die Sensoraufnahme 12 besteht im Wesentlichen aus einer scheibenförmigen Halterung 22 und einer Führung 24, welche in eine Aufnahme 26 der Halterung 22 eingepresst ist. Alternativ kann jedoch auch vorgesehen sein, dass die Führung 24 auf andere Weise an der Halterung 22 festgelegt ist, beispielsweise durch Verschrauben, Verkleben, Verschweißen oder Verlöten.

Das in den Sensoraufnahmekanal 16 eingesetzte rohrförmige Spannelement 18 ist in der vorliegenden Ausführungsform zweiteilig ausgebildet mit einem sensoraufnahmeöffnungsnäheren ersten Rohrteil 28 und einem sensoraufnahmeöffnungsferneren zweiten Rohrteil 30, welches an ein sensoraufnahmeöffnungsfernes Ende 32 des ersten Rohrteils 28 anliegt.

Gemäß dieser Ausführungsform besteht das erste Rohrteil 28 und die Sensoraufnahme 12 aus demselben Material, insbesondere aus Metall, um zum einen die Maßhaltigkeit dieser Bauteile zu gewährleisten und darüber hinaus sicherzustellen, dass das erste Rohrteil 28 in etwa denselben Wärmeausdehnungskoeffizienten aufweist wie die Sensoraufnahme 12 bzw. die Führung 24, um die Passgenauigkeit auch im erwärmten Zustand der Sensoraufnahme 12 sicherzustellen. Ferner dient die Verwendung derselben Materialien auch dazu, dass die Pressung des Dichtungsringes unabhängig von der Temperatur immer gleich ist. Zudem ergeben sich Preis-/Konstruktions- und Montagevorteile, wenn dieses Teil aus Metall und insbesondere Stahl gefertigt ist.

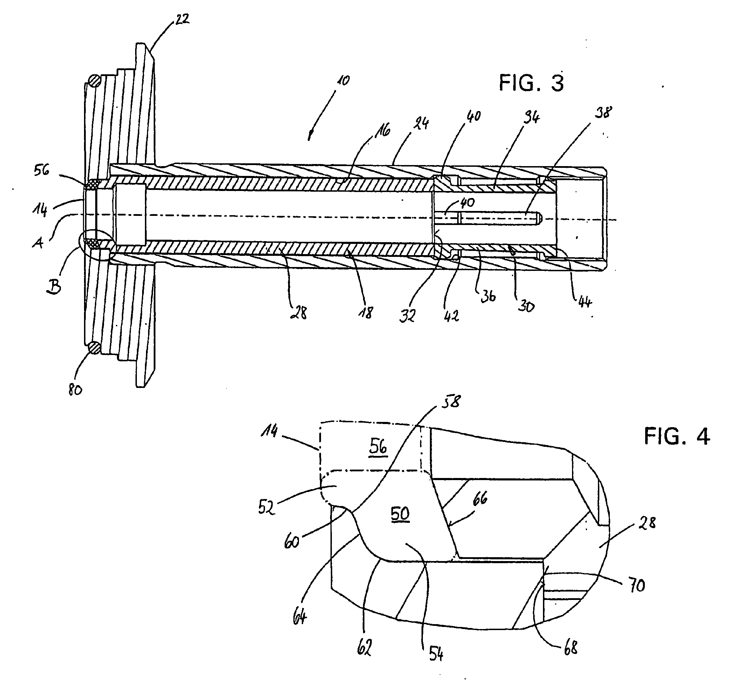

Das zweite Rohrteil 30 ist einfachheitshalber und aus Gründen der Elastizität aus Kunststoff gefertigt und weist vier in radialer Richtung vorstehende elastische Halteelemente 34 auf, welche um 90° versetzt zueinander um den Umfang des zweiten Rohrteils 30 herum angeordnet sind und jeweils in Längsrichtung des zweiten Rohrteils 30 verlaufen. Jedes Halteelement 34 in dieser Ausführungsform ist von einem Blattfederelement 36 (Fig. 3) gebildet mit einem in Längsrichtung des zweiten Rohrteils 30 verlaufenden länglichen Steg 38 und einem an dem sensoraufnahmeöffnungsnahen Ende des Stegs 38 ausgebildeten Vorsprung 40 zum Verrastungseingriff in eine am Innenumfang der Führung 24 ausgebildete radiale Vertiefung 42, um das Spannelement 18 (das erste Rohrteil 28 und das zweite Rohrteil 30) lösbar in der Sensoraufnahme 12 festzulegen.

Um das zweite Rohrteil 30 in die Führung 24 einzusetzen, ist es durch diese Ausgestaltung lediglich notwendig, das Halteelement 34 bzw. die vier Blattfederelemente 36, welche um den Umfang des zweiten Rohrteils 30 herum angeordnet sind, von Hand zusammenzudrücken (denkbar wäre auch die Ausbildung des zweiten Rohrteils 30 aus Metall, insbesondere Stahl, jedoch müssten dann dünnere Wandstärken verwendet werden, um das Teil biegen zu können und als Feder einsetzen und montieren zu können). Nach dem Einschieben des zweiten Rohrteils 30 entspannen sich die Blattfederelemente 36 wieder und verankern das erste Rohrteil 28 und das zweite Rohrteil 30 mit Spiel, so dass das Spannelement 18 auch bei einem Kippen der Sensoraufnahme 12 nicht verloren gehen kann. Das Spiel sorgt ferner dafür, dass das erste Rohrteil 28 bei nicht montiertem Sensor entspannt vorliegt, ohne die Dichtung zu verpressen, wodurch der Sensor ohne wesentlichen Dichtungsring-Widerstand eingeführt werden kann.

Darüber hinaus ist die Federkraft des Halteelements 34 und die radiale Vertiefung 42 vorzugsweise so eingestellt, dass durch einen etwas stärkeren Schlag auf das erste Rohrteil 28 das zweite Rohrteil 30 wieder demontiert werden kann, ohne mit einem Hilfsmittel ins Innere der Sensoraufnahme 12 eingreifen zu müssen.

An dem sensoraufnahmeöffnungsfernen Ende des zweiten Rohrteils 30 ist eine Anlagefläche 44 ausgebildet, welche mit einer separaten Spannvorrichtung 46, insbesondere einem an dem sensoraufnahmeöffnungsnahen Ende der Spannvorrichtung 46 ausgebildeten Anschlag 48 in Eingriff bringbar ist, um das Spannelement 18 in axialer Richtung der Sensoraufnahme 12 zu verlagern.

Die Sensoraufnahme 12, das Spannelement 18 und der in die Sensoraufnahme 12 einsetzbare Sensor 20 definieren im fertig montierten Zustand der Sensor-Befestigungsanordnung 10 einen den Sensor 20 radial außen umgebenden Dichtungsaufnahmeraum 50, mit einem sensoraufnahmeöffnungsnäheren Abschnitt kleinerer radialer Spaltweite 52 und einem sensoraufnahmeöffnungsferneren Abschnitt größerer radialer Spaltweite 54, in welchen Dichtungsaufnahmeraum 50 ein durch das Spannelement 18 verformbarer Dichtungsring, insbesondere O-Ring 56 (welcher in Fig. 4 zur deutlicheren Darstellung des Dichtungsaufnahmeraum 50 lediglich durch Strichpunktlinie schematisch dargestellt ist), eingesetzt ist, welcher sich dann, wenn das Spannelement 18, wie in den Fig. 1, 3 und 4 dargestellt, in der Spannstellung befindet, weiter in den sensoraufnahmeöffnungsnäheren Abschnitt 52 erstreckt, als dann, wenn sich das Spannelement 18 in der Entspannungsstellung befindet.

Diesbezüglich sei darauf hingewiesen, dass die oben angesprochene radiale Vertiefung 42 in der axialen Richtung derart verlängert ausgebildet ist, dass sie eine Verlagerung des Spannelements 18 zwischen der Entspannungsstellung und der Spannstellung erlaubt, ohne dass der Vorsprung 40 des Blattfederelements 36 aus der radialen Vertiefung 42 austritt.

Weiterhin wird darauf hingewiesen, dass sich der Dichtungsring 56 dann, wenn sich das Spannelement 18 in der Entspannungsstellung befindet, im Dichtungsaufnahmeraum 50 im unverformten Zustand befindet und dass der Innendurchmesser des Dichtungsrings 56 in diesem Zustand größer als der Außendurchmesser eines den Dichtungsring 56 durchwandernden Abschnitts des Sensors 20 ist, was ein reibungsfreies Einführen des Sensors durch den Dichtungsring in der Entspannungsstellung des Spannelements 18 erlaubt.

Wie insbesondere in der Detailansicht in Fig. 4 zu sehen ist, gehen der sensoraufnahmeöffnungsfernere Abschnitt 54 und der sensoraufnahmeöffnungsnähere Abschnitt 52 des Dichtungsaufnahmeraums 50 bei Annäherung an die Sensoraufnahmeöffnung 14 unter Bildung einer radialen Stufe 58 ineinander über. Genauer gesagt ist der Dichtungsaufnahmeraum 50 rotationssymmetrisch ausgebildet und umfasst bei Betrachtung seines die Rotationssymmetrieachse A enthaltenden Querschnitts wenigstens drei in axialer Richtung aufeinander folgende Abschnitte, einen dem Abschnitt 52 kleinerer radialer Spaltweite zugeordneten ersten Abschnitt 60, einen dem Abschnitt 54 größerer radialer Spaltweite zugeordneten weiteren Abschnitt 62 und einen einem Übergangsbereich zwischen dem ersten 60 und dem weiteren Abschnitt 62 zugeordneten Übergangsabschnitt 64, wobei eine an die Kontur der radialen Stufe 58 angelegte Tangente im ersten 60 und im weiteren Abschnitt 62 eine geringere Neigung bezüglich der Rotationssymmetrieachse A hat als im Übergangsabschnitt 64.

Wie weiterhin aus Fig. 4 ersichtlich ist, wird die Dichtung 56 durch das sensoraufnahmeöffnungsnahe Ende 66 des ersten Rohrteils 28 in der Spannstellung des Spannelements 18 so weit in den Dichtungsaufnahmeraum 50 gedrückt, bis der Dichtungsring 56 den Dichtungsaufnahmeraum 50 vollständig ausführt und an der Sensoraufnahmeöffnung 14 leicht in einen vorgelagerten Messbereich (nicht dargestellt) hineinragt. Zur Begrenzung der Vorschubbewegung des Spannelements 18 in der Spannstellung ist das erste Rohrteil 28 an seinem sensoraufnahmeöffnungsnahen Ende mit einem Anschlag 68 zur Anlage an einen mit der Sensoraufnahme 12 fest verbundenen Gegenanschlag 70 versehen.

Wie weiterhin aus Fig. 4 entnehmbar ist, verjüngt sich das sensoraufnahmeöffnungsnahe Ende 66 des Spannelements 18 zur Sensoraufnahmeöffnung 14 hin und ist zumindest in seinem sensoraufnahmeöffnungsnahen Bereich rotationssymmetrisch ausgebildet, wobei sich die Neigung seiner Kontur bei Betrachtung eines die Rotationssymmetrieachse A enthaltenden Schnitts zumindest abschnittsweise um nicht mehr als 10°, vorzugsweise nicht mehr als 5° von der Neigung des Übergangsabschnitts 64 unterscheidet, höchstvorzugsweise dieser entspricht.

Der Effekt, der hierdurch erzielt wird, besteht zum einen darin, dass der Dichtungsring 56 in der Spannstellung des Spannelements 18 nicht nur geradlinig in den Dichtungsaufnahmeraum bzw. den sensoraufnahmeöffnungsnäheren Abschnitt gepresst wird, sondern infolge der aneinander angepassten Neigungen zunächst in der Form eines Parallelflachs oder einer Ellipse vorverformt wird und im Anschluss daran nur ein kleiner Randbereich in den sensoraufnahmeöffnungsnäheren Abschnitt 52 hinein gepresst wird, was eine vereinfachte Montage des Dichtungsrings erlaubt. Darüber hinaus ermöglichen es die aufeinander abgestimmten Neigungen des Spannelements 18 und des Übergangsabschnitts 64, den Dichtungsring 56 auch im entspannten Zustand des Spannelements 18 und ggf. auch in einem versehentlich gespannten Zustand sicher in der Sensoraufnahme 12 zu halten, selbst wenn der Sensor 20 nicht in den Sensoraufnahmekanal 16 eingesetzt ist.

Bei der dargestellten Ausführungsform besteht die Spannvorrichtung 46 im Wesentlichen aus einem an dem Sensor 20 gelagerten Ringelement 72, an dessen sensoraufnahmeöffnungsnahen Ende der Anschlag 48 zur Anlage an der Anlagefläche 44 des zweiten Rohrteils 30 vorgesehen ist, an dessen sensoraufnahmeöffnungsfernen Ende eine Werkzeugeingriffsfläche 74 ausgebildet ist und an dessen Außenumfang ein Gewinde 76 vorgesehen ist zum Eingriff in ein an einer Innenumfangsfläche der Führung 24 ausgebildetes Innengewinde 78. Durch diese Ausbildung der Spannvorrichtung 46 ist es möglich, gleichzeitig mit dem Einschrauben des Sensors 20 in die Sensoraufnahme 12 auch das Spannelement 18 von der Entspannungsstellung in die Spannstellung zu verlagern, ohne dabei jedoch den Sensor selbst verdrehen zu müssen.

Zur Abdichtung der Sensoraufnahme 12 bzw. der scheibenförmigen Halterung 22, welche in der dargestellten Ausführungsform ein Prozessanschluss vom Varivent-Adapter-Typ ist, gegenüber einer die zu einer Messstelle führenden Durchgangsöffnung umgebenden Wand eines Behältnisses, welches nicht dargestellt ist, dient in der vorliegenden Ausführungsform ein weiterer Dichtungsring 80, welcher in einer in der scheibenförmigen Halterung 22 ausgebildeten radialen Vertiefung aufgenommen ist.

Bei der Montage des Sensors 20 in der Sensoraufnahme 12, in welcher bereits der Dichtungsring 56 und das Spannelement 18 aufgenommen und festgelegt sind, wird der Sensor mit seinem vorderen Ende 82, welches gleichzeitig der messempfindliche Bereich des Sensors 20 ist, in das sensoraufnahmeöffnungsferne Ende der Führung 24 und des Spannelements 18 eingeschoben, bis das Außengewinde 76 des Ringelements 72 mit dem Innengewinde 78 der Führung 24 in Eingriff tritt. Hierauf wird das Ringelement 72 mittels eines geeigneten Werkzeugs über die Werkzeugeingriffsfläche 74 zunächst so weit eingedreht, bis der Anschlag 48 des Ringelements 72 (bzw. der Spannvorrichtung 46) an der Anlagefläche 44 des zweiten Rohrteils 30 anliegt, wobei das vordere Ende 82 des Sensors 20 den Dichtungsring 56 durchwandert, ohne diesen dabei zu verformen.

Beim weiteren Eindrehen des Ringelements 72 bewegt sich im Folgenden nicht nur der Sensor 20 weiter in Richtung auf die Sensoraufnahmeöffnung zu, sondern gleichzeitig wird auch das Spannelement 18, welches bis dato nur lose, jedoch unverlierbar, in der Führung 24 angeordnet war, und verformt bei der weiteren Eindrehbewegung des Ringelements 72 mit seinem sensoraufnahmenahen Ende 66 den Dichtungsring 56 derart, dass dieser dann, wenn der Anschlag 68 des ersten Rohrteils 28 an dem Gegenanschlag 70 zur Anlage kommt, durch die Sensoraufnahme 12, das erste Rohrteil 28 des Spannelements 18 und den in die Sensoraufnahme 12 eingesetzten Sensor 20 in vorgegebener Weise verformt ist und den Dichtungsaufnahmeraum 50 vollständig ausfüllt. Die fertig montierte Sensor-Befestigungsanordnung 10 kann im Anschluss daran (oder noch vor dem Einsetzen des Sensors) an dem Behältnis angebracht werden, indem die scheibenförmige Halterung 24 in eine entsprechend ausgebildete Durchgangsöffnung, welche durch die Wandung des Behältnisses zur Messstelle führt, unter gleichzeitiger Abdichtung mittels des Dichtungsrings 80 eingesetzt wird.

Vorteilhafterweise kann die ringförmige Dichtung 56 auch für aseptische Anwendungen, insbesondere auch bei großen Temperaturdifferenzen eingesetzt werden, da sich die Dichtung 56 ohne Zerstörung aus dem Dichtungsaufnahmeraum 50 nach außen ausdehnen und sich in diesen zurückziehen kann. Darüber hinaus ist die erfindungsgemäße Sensor-Befestigungsanordnung 10 auch für Anwendungen in einem Unterdruck-Messbereich geeignet, da die Dichtung 56 durch die stufenförmige Ausbildung des Dichtungsaufnahmeraums 50 und den zur Sensoraufnahmeöffnung hin verjüngenden Spalt im Dichtungsaufnahmeraum 50 zurückgehalten wird.

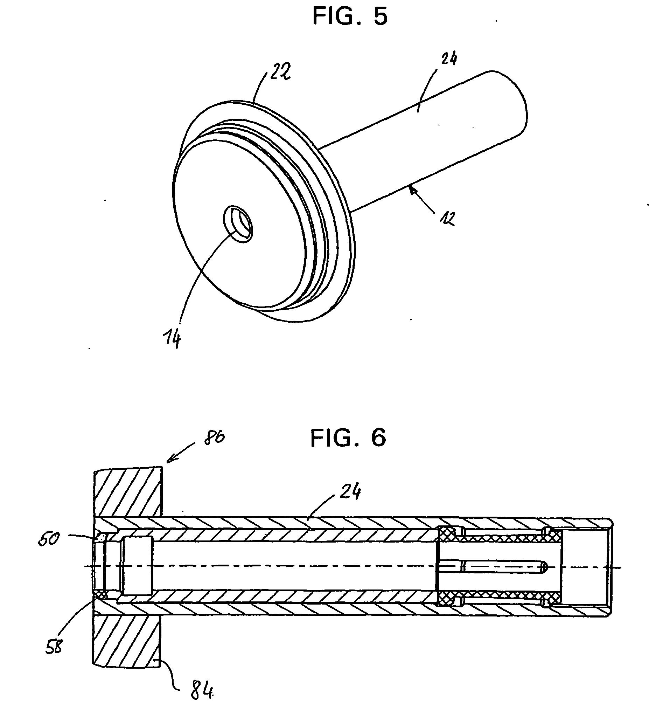

Fig. 6 zeigt eine erste alternative Ausführungsform der Erfindung, welche sich gegenüber der in den Fig. 1 bis 5 dargestellten ersten Ausführungsform lediglich dadurch unterscheidet, dass die Führung 24 nicht über eine scheibenförmige Halterung mit einem die Messstelle umgebenden Behältnis verbunden ist, sondern dass die Wand 84 des Behältnisses 86 die Halterung für die Führung 24 bildet, d.h. dass die Führung 24 direkt mit der Wand 84 des die Messstelle umgebenden Behältnisses 86 verbunden ist und dass die radiale Stufe 58 bzw. der Dichtungsaufnahmeraum 50 in der Führung 24 ausgebildet ist. Da die übrigen Bauteile dieser Ausführungsform identisch zu denen in der ersten Ausführungsform sind, wird deren erneute Erläuterung unterlassen.

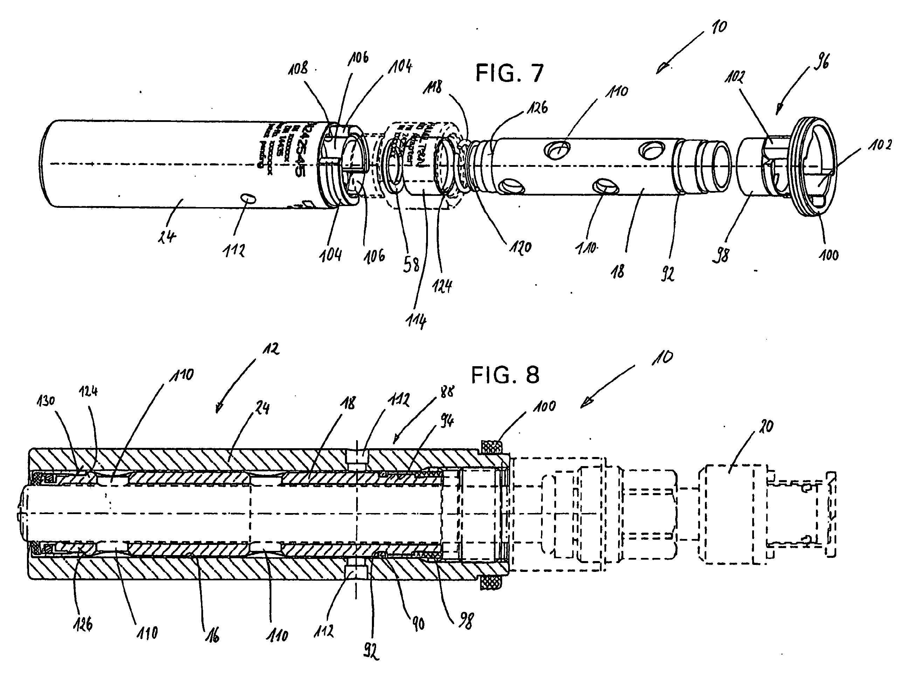

Die Fig. 7 bis 10 zeigen eine zweite alternative Ausführungsform der Erfindung, welche sich wie die in Fig. 6 gezeigte erste alternativen Ausführungsform gegenüber der in den Fig. 1 bis 5 gezeigten ersten Ausführungsform dadurch unterscheidet, dass die Führung 24 anstelle über eine scheibenförmige Halterung direkt mit einer nicht dargestellten Wand eines eine Messstelle umgebenden Behältnisses zu verbinden ist.

Darüber hinaus unterscheidet sich diese Ausführungsform aber gegenüber den vorangehend erwähnten Ausführungsformen durch eine unterschiedliche Gestaltung des Halteelements 88, welches anstelle einer Vielzahl von Blattfederelementen 36 (siehe Fig. 3) von einem einzelnen O-Ring 90 gebildet ist, welcher in einer am Außenumfang des Spannelements 18 vorgesehenen Nut 92 angeordnet ist und sich mit der Innenumfangsfläche 94 (Fig. 8) der Führung 24 im Reibungseingriff befindet, um so das Spannelement 18 lösbar in der Sensoraufnahme bzw. der Führung 24 festzulegen.

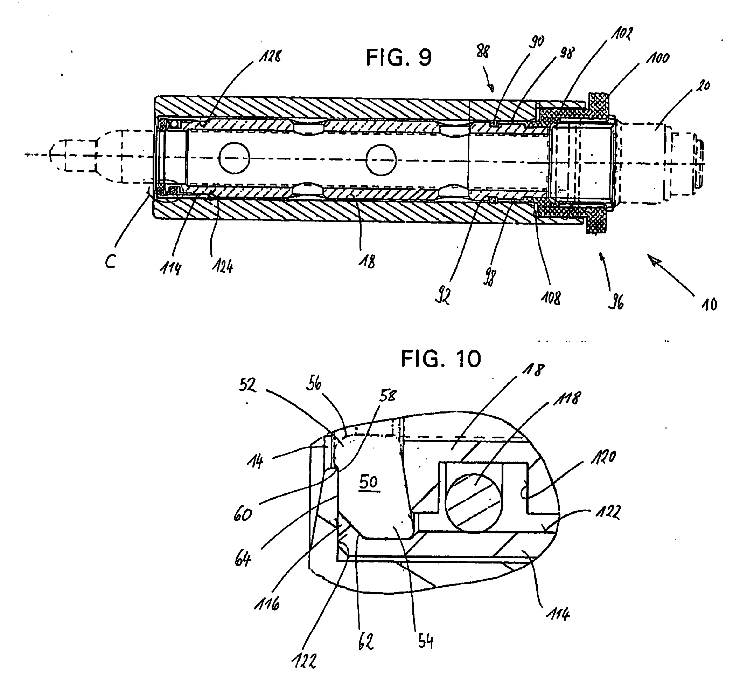

Wie man in den Fig. 7 bis 10 auch erkennt, ist das sensoraufnahmeöffnungsferne Ende des Spannelements 18 zusätzlich mit einem Führungselement 96 versehen, welches im Wesentlichen aus einem sensoraufnahmeöffnungsnäheren Ringelement 98 mit kleinem Durchmesser und einem sensoraufnahmeöffnungsferneren Ringelement 100 mit großem Durchmesser besteht, wobei die beiden Ringelemente 98 und 100 über zwei in axialer Richtung verlaufende Stege 102 miteinander verbunden sind. Diese in axialer Richtung verlaufenden Stege 102 dienen jedoch nicht nur zur Verbindung der beiden Ringelemente 98 und 100, sondern vor allem im fertig montierten Zustand der Sensor-Befestigungsanordnung 10, in dem das Ringelement 98 mit kleinem Durchmesser an dem sensoraufnahmeöffnungsfernen Ende des Spannelements 18 festgelegt ist und das Spannelement 18 in die Führung 24 eingeschoben ist, als Führung in zwei radial gegenüberliegenden Aufnahmeräumen 106, welche zwischen zwei an dem sensoraufnahmeöffnungsfernen Ende der Führung 24 ausgebildeten halbkreisförmigen Führungsvorsprüngen 104 vorgesehenen sind, sowie in zwei an der Innenseite der Führung 24 vorgesehenen nutförmig ausgebildete Stegführungen 108 (siehe Fig. 9), die sich jeweils in axialer Richtung an das sensoraufnahmeöffnungsnahen Ende eines Aufnahmeraums 106 anschließen.

Im montierten Zustand des Führungselements 96 an dem Spannelement 18 liegt darüber hinaus das sensoraufnahmeöffnungsnahe Ende des durchmesserkleinen Ringelements 98 im Wesentlichen an der im Außenumfang des Spannelements 18 ausgebildeten Nut 92 an, um als zusätzliche Abstützung des O-Rings 90 zu dienen, wobei ggf. die Abstützung des O-Rings 90 in axialer Richtung auch gänzlich von dem Führungselement 96 gebildet sein kann.

Weiterhin unterscheidet sich diese Ausführungsform gegenüber den vorangehend erwähnten Ausführungsformen dadurch, dass in dem Spannelement 18 versetzt angeordnete Bohrungen 110 vorgesehen sind, welche zum einen eine Gewichtserleichterung des Spannelements 18 bewirken, zum anderen aber mit zwei in der Führung 24 ausgebildeten und in radialer Richtung verlaufenden Bohrungen 112 zusammenwirken können, um im montierten Zustand des Sensors 20 einen Spülzugang für eine Spülflüssigkeit zum Innenraum des Sensoraufnahmekanals 16 und damit zu der von der Sensoraufnahmeöffnung 14 abgewandten Seite des Dichtungsrings 56 bereitzustellen.

Als weiteren wesentlichen Unterschied zu den vorangehenden Ausführungsformen weist diese Ausführungsform ferner eine sogenannte Dichtungskralle 114 auf, welche einerseits als Anschlag für das in die Führung 24 eingesetzte Spannelement 18 dient, um so den maximal zulässigen Vorschub des Spannelements 18 einzustellen, andererseits aber auch dazu dient, den in den Dichtungsaufnahmeraum 50 einzusetzenden Dichtungsring, insbesondere O-Ring 56, in einfacher Weise montieren und demontieren zu können. Bei der in den Fig. 1 bis 5 dargestellten Ausführungsform ist es aufgrund der lösbaren Befestigung der Sensoraufnahme nämlich möglich, den Dichtungsring 56 durch Schütteln der Sensor-Befestigungsanordnung aus der Führung zu entfernen, wohingegen dies bei der in den Fig. 7 bis 10 dargestellten Ausführungsform nicht möglich ist, da hier die Führung 24 fest in eine Reaktorwandung eingebaut wird. Daher ist gemäß dieser Ausführungsform die Dichtungskralle 114 vorgesehen, mit welcher der Dichtungsring 56 montiert/demontiert werden kann.

Die Dichtungskralle 114 besteht im Wesentlichen aus einem ringförmigen Element, welches, wie insbesondere in Fig. 10 dargestellt ist, in seinem sensoraufnahmeöffnungsnahen Endbereich an seiner radial nach innen gewandten Seite mit einem radial nach innen vorstehenden ringförmigen Vorsprung 116 versehen ist, welcher durch seinen Eingriff mit bzw: seine Anlage an dem Dichtungsring 56 bewirkt, dass der Dichtungsring 56 beim Herausziehen des Spannelements 18 mühelos aus dem Dichtungsaufnahmeraum 50 entfernen werden kann, ohne hierfür ein zusätzliches Werkzeug einsetzen zu müssen oder die Sensor-Befestigungsanordnung schütteln zu müssen, um den Dichtungsring 56 aus der Führung 24 entfernen zu können.

Um eine unverlierbare, jedoch lösbare Verbindung zwischen dem Spannelement 18 und der Dichtungskralle 114 zu ermöglichen, ist darüber hinaus gemäß dieser Ausführungsform einen Spannring 118 vorgesehen, welcher in einer an dem sensoraufnahmeöffnungsnahen Ende des Spannelements 18 ausgebildeten Außenumfangsnut 120 mit axialem Spiel aufgenommen ist und unter Vorspannung an der Innenumfangsfläche 122 der Dichtungskralle 114 anliegt.

Wie bereits erwähnt, dient die Dichtungskralle 114 in dieser Ausführungsform als Anschlag des Spannelementes 18 an einem mit der Sensoraufnahme 12 fest verbundenen Gegenanschlag 122, wofür die Dichtungskralle 114 an ihrem sensoraufnahmeöffnungsfernen Ende mit einer Anlagefläche 124 zur Anlage an einer an dem sensoraufnahmeöffnungsnahen Ende des Spannelements 18 ausgebildeten Gegenanlagefläche 126 (siehe Fig. 8) ausgebildet ist und welche zusätzlich zu ihrer Funktion als Axialanschlag für das Spannelement 18 vor allem dazu dient, beim Einschieben des Spannelements 18 in die Führung 24 in axialer Richtung Druck auf den Dichtungsring 58 ausüben zu können, um diesen definiert bis zur Sensoraufnahmeöffnung 14 vorschieben zu können. Darüber hinaus ist die Dichtungskralle 114 an ihrem sensoraufnahmeöffnungsfernen Ende an ihrer Innenseite mit einer Gleitfläche 128 versehen, welche auf einer an dem Spannelement 18 ausgebildeten, nach radial außen weisenden Gleitfläche 130 (Fig. 8) axial verschieblich gelagert ist, um ein gewisses Spiel zwischen der Dichtungskralle 114 und dem Spannelement 18 zu ermöglichen.

Wie insbesondere in der Detaildarstellung in Fig. 10 zu sehen ist, gehen auch in dieser Ausführungsform der sensoraufnahmeöffnungsfernere Abschnitt 54 und der sensoraufnahmeöffnungsnähere Abschnitt 52 des Dichtungsaufnahmeraums bei Annäherung an die Sensoraufnahmeöffnung 14 unter Bildung einer radialen Stufe 58 ineinander über und umfassen bei Betrachtung seines die Rotationssymmetrieachse A enthaltenden Querschnitt die drei im ersten Beispiel erwähnten, in axialer Richtung aufeinander folgenden Abschnitte, einen dem Abschnitt 52 kleinerer radialer Spaltweite zugeordneten ersten Abschnitt 60, einen dem Abschnitt 54 größerer radialer Spaltweite zugeordneten weiteren Abschnitt 62 und einen einem Übergangsbereich zwischen dem ersten 60 und dem weiteren Abschnitt 62 zugeordneten Übergangsabschnitt 64, wobei dieser Übergangsabschnitt 64 jedoch auch an dem ringförmigen Vorsprung 116 bzw. der Dichtungskralle 114 ausgebildet sein kann. Da die übrigen Bauteile dieser Ausführungsform im Wesentlichen identisch zu denen in der ersten Ausführungsform sind, wird deren erneute Erläuterung unterlassen.

## Patentansprüche

1. Sensor-Befestigungsanordnung, umfassend:
eine Sensoraufnahme (12) zur Aufnahme und Führung eines Sensors (20), welche einen zu einer Sensoraufnahmeöffnung (14) führenden, in einer axialen Richtung (A) verlaufenden Sensoraufnahmekanal (16) bereitstellt,
einen in die Sensoraufnahmeöffnung (14) einsetzbaren Sensor (20), ein Spannmittel (18), welches verlagerbar ist zwischen einer Spannstellung und einer Entspannungsstellung,
wobei die Sensoraufnahme (12), das Spannmittel (18) und ein in die Sensoraufnahme (12) eingesetzter Sensor (20) im fertig montierten Zustand der Sensor-Befestigungsanordnung (10) einen den Sensor (20) radial außen umgebenden Dichtungsaufnahmeraum (50) definieren mit einem sensoraufnahmeöffnungsnäheren Abschnitt (52) kleinerer radialer Spaltweite und einem sensoraufnahmeöffnungsferneren Abschnitt (54) größerer radialer Spaltweite,
sowie einen durch das Spannmittel (18) verformbaren Dichtungsring (56), welcher in dem Dichtungsaufnahmeraum (50) angeordnet ist, und welcher sich dann, wenn sich das Spannmittel (18) in der Spannstellung befindet, weiter in den sensoraufnahmeöffnungsnäheren Abschnitt (52) erstreckt, als dann, wenn sich das Spannmittel (18) in der Entspannungsstellung befindet, wobei das Spannmittel (18) mit einer separaten Spannvorrichtung (46) in Eingriff bringbar ist, durch die das Spannmittel (18) von der Entspannungsstellung in die Spannstellung verlagerbar ist,
**dadurch gekennzeichnet,**
**dass** ein Bauteil aus Spannmittel (18) und Sensoraufnahme (12) ein Haltemittel (34) aufweist, welches im Zusammenwirken mit einem/einer am jeweils anderen Bauteil ausgebildeten Gegenhaltemittel (42) oder Reibfläche (94) das Spannmittel (18), vorzugsweise lösbar, in der Entspannungsstellung unverlierbar an der Sensoraufnahme (12) hält.

2. Sensor-Befestigungsanordnung nach Anspruch 1,
**dadurch gekennzeichnet, dass** das zum Reibungseingriff mit der Reibfläche (94) bestimmte Haltemittel (90) von einem ringförmigen, vorzugsweise elastischen Halteelement (90) gebildet ist.

3. Sensor-Befestigungsanordnung nach Anspruch 1,
**dadurch gekennzeichnet, dass** ein Bauteil aus Spannmittel (18) und Sensoraufnahme (12) mit einem in radialer Richtung vorstehenden elastischen Halteelement (34) als das Haltemittel versehen ist zum Verrastungseingriff in eine am jeweils anderen Bauteil ausgebildete, vorzugsweise in axialer Richtung verlängerte radiale Vertiefung (42) als das Gegenhaltemittel.

4. Sensor-Befestigungsanordnung nach einem der vorhergehenden Ansprüche,
**dadurch gekennzeichnet, dass** die Spannvorrichtung (46) vom Sensor (20) getragen ist.

5. Sensor-Befestigungsanordnung nach einem der vorhergehenden Ansprüche,
**dadurch gekennzeichnet, dass** die Spannvorrichtung (46) einen gemeinsam mit dem Sensor (20), insbesondere axial, bewegbaren Anschlag (48) umfasst, welcher mit einem am Spannmittel (18) vorgesehenen Gegenanschlag (44) in Eingriff bringbar ist und/oder dass der Sensor (20), vorzugsweise in seinem sensoraufnahmeöffnungsfemen Endbereich, mit einer Eingriffsausbildung, insbesondere mit einem Gewinde (76) oder Bajonettverschluss, versehen ist zum Eingriff mit einer an der Sensoraufnahme (12), insbesondere der Führung (24), ausgebildeten Gegeneingriffsausnehmung (78).

6. Sensor-Befestigungsanordnung nach Anspruch 5,
**dadurch gekennzeichnet, dass** die Eingriffsausbildung (76) die Spannvorrichtung bildet.

7. Sensor-Befestigungsanordnung nach einem der vorhergehenden Ansprüche,
**dadurch gekennzeichnet, dass** das Spannmittel (18) ein einteilig ausgebildetes rohrförmiges Element ist, oder dass das Spannmittel (18) ein wenigstens zweiteilig ausgebildetes rohrförmiges Element (18) ist mit einem sensoraufnahmeöffnungsnäheren ersten Rohrteil (28) und einem sensoraufnahmeöffnungsfemeren zweiten Rohrteil (30), welches an ein sensoraufnahmeöffnungsfernes Ende (32) des ersten Rohrteils (28) in Anlage bringbar ist.

8. Sensor-Befestigungsanordnung nach Anspruch 7,
**dadurch gekennzeichnet, dass** das Spannmittel (18) und die Sensoraufnahme (12) unter Verwendung desselben Materials mit gleichem Ausdehnungskoeffizienten, insbesondere von Metall, gebildet sind.

9. Sensor-Befestigungsanordnung nach einem der vorhergehenden Ansprüche,
**dadurch gekennzeichnet, dass** der sensoraufnahmeöffnungsfernere Abschnitt (54) und der sensoraufnahmeöffnungsnähere Abschnitt (52) des Dichtungsaufnahmeraums (50) bei Annäherung an die Sensoraufnahmeöffnung (14) unter Bildung einer radialen Stufe (58) ineinander übergehen.

10. Sensor-Befestigungsanordnung nach einem der vorhergehenden Ansprüche,
**dadurch gekennzeichnet, dass** der Dichtungsring (56) dann, wenn sich das Spannmittel (18) in der Entspannungsstellung befindet, im unverformten Zustand ist, und dann, wenn sich das Spannmittel (18) in der Spannstellung befindet, durch die Sensoraufnahme (12), das Spannmittel (18) und den in die Sensoraufnahme (12) eingesetzten Sensor (20) verformt ist und den Dichtungsaufnahmeraum (50) vollständig ausfüllt.

11. Sensor-Befestigungsanordnung nach einem der vorhergehenden Ansprüche,
**dadurch gekennzeichnet, dass** der Innendurchmesser des Dichtungsrings (56) im unverformten Zustand größer als der Außendurchmesser eines den Dichtungsring (56) durchwandernden Abschnitts des Sensors (20) ist.

12. Sensor-Befestigungsanordnung nach einem der vorhergehenden Ansprüche,
**dadurch gekennzeichnet, dass** das Spannmittel (18) in seinem sensoraufnahmeöffnungsnahen Endbereich (66) mit einem Anschlag (68) zur Anlage an einen mit der Sensoraufnahme (12) fest verbundenen Gegenanschlag (70) versehen ist.

13. Sensor-Befestigungsanordnung nach Anspruch 12,
**dadurch gekennzeichnet, dass** der Anschlag des Spannmittels (18) von einem gesonderten, insbesondere ringförmigen Element (114) gebildet ist, welches mit dem sensoraufnahmeöffnungsnahen Endbereich (66) des Spannmittels (18), vorzugsweise lösbar und/oder in Axialrichtung verschiebbar, verbunden ist.

14. Sensor-Befestigungsanordnung nach Anspruch 13,
**dadurch gekennzeichnet, dass** das ringförmige Element (114) an seinem sensoraufnahmeöffnungsnahen Ende mit einem radial nach innen vorstehenden, vorzugsweise ringförmigen Vorsprung (116) versehen ist, welcher den im Dichtungsraum (50) anzuordnenden Dichtungsring (56) unverlierbar an dem Spannmittel (18) hält und/oder dass das ringförmige Element (114) in seinem sensoraufnahmeöffnungsnahen Endbereich an seiner radial nach innen gerichteten Seite mit einer ringförmigen radialen Vertiefung zur Aufnahme eines radial äußeren Bereichs des Dichtungsrings (56) versehen ist.

15. Sensor-Befestigungsanordnung nach einem der vorhergehenden Ansprüche,
**dadurch gekennzeichnet, dass** die Sensoraufnahme (12) integral mit einer Wand (84) eines die Messstelle umgebenden Behältnisses (86) verbunden ist, insbesondere von dessen Wand (84) gebildet ist.

## Claims

1. A sensor fixing assembly, comprising:
a sensor receptacle (12) for receiving and guiding a sensor (20), said receptacle providing a sensor receiving channel (16) leading to a sensor receiving opening (14) and extending in an axial direction (A),
a sensor (20) insertable into the sensor receiving opening (14), a clamping means (18), which is displaceable between a clamping position and a release position,
the sensor receptacle (12), the clamping means (18) and a sensor (20) inserted into the sensor receptacle (12) defining, when the sensor fixing assembly (10) is in the ready-mounted state, a seal receiving space (50) surrounding the sensor (20) radially on the outside, said seal receiving space (50) having a portion (52) of smaller radial gap width closer to the sensor receptacle opening and a portion (54) of greater radial gap width further from the sensor receptacle opening,
and a sealing ring (56) deformable by the clamping means (18), which sealing ring (56) is arranged in the seal receiving space (50) and which, when the clamping means (18) is in the clamping position, extends further into the portion (52) closer to the sensor receiving opening than when the clamping means (18) is in the release position, the clamping means (18) being capable of being brought into engagement with a separate clamping device (46), by which the clamping means (18) may be moved from the release position into the clamping position,
**characterised in that**
a component consisting of clamping means (18) and sensor receptacle (12) comprises a retaining means (34), which, in cooperation with a mating retaining means (42) or friction surface (94) formed on the respective other component, retains the clamping means (18), preferably detachably, captively on the sensor receptacle (12) in the release position.

2. A sensor fixing assembly according to claim 1,
**characterised in that** the retaining means (90) intended for frictional engagement with the friction surface (94) is formed of an annular, preferably resilient retaining element (90).

3. A sensor fixing assembly according to claim 1,
**characterised in that** a component consisting of clamping means (18) and sensor receptacle (12) is provided with a resilient retaining element (34) projecting in the radial direction as retaining means for locking engagement in a radial depression (42) formed in the respective other component and preferably extended in the axial direction, as mating retaining means.

4. A sensor fixing assembly according to any one of the preceding claims,
**characterised in that** the clamping device (46) is borne by the sensor (20).

5. A sensor fixing assembly according to any one of the preceding claims,
**characterised in that** the clamping device (46) comprises a limit stop (48) jointly movable, in particular axially, with the sensor (20), which limit stop (48) may be brought into engagement with a mating limit stop (44) provided on the clamping means (18) and/or **in that** the sensor (20), preferably in its end region remote from the sensor receiving opening, is provided with an engagement structure, in particular with a thread (76) or bayonet closure, for engagement with a mating engagement recess (78) formed on the sensor receptacle (12), in particular the guide (24).

6. A sensor fixing assembly according to claim 5,
**characterised in that** the engagement structure (76) forms the clamping device.

7. A sensor fixing assembly according to any one of the preceding claims,
**characterised in that** the clamping means (18) is a tubular element of one-part construction, or **in that** the clamping means (18) is a tubular element (18) of at least two-part construction, with a first tube part (28) closer to the sensor receiving opening and a second tube part (30) further away from the sensor receiving opening, which may be brought to rest against an end (32) of the first tube part (28) remote from the sensor receiving opening.

8. A sensor fixing assembly according to claim 7,
**characterised in that** the clamping means (18) and the sensor receptacle (12) are formed using the same material with the same coefficient of expansion, in particular of metal.

9. A sensor fixing assembly according to any one of the preceding claims,
**characterised in that** the portion (54) further away from the sensor receiving opening and the portion (52) closer to the sensor receiving opening of the seal receiving space (50) merge together towards the sensor receiving opening (14), forming a radial step (58).

10. A sensor fixing assembly according to any one of the preceding claims,
**characterised in that**, when the clamping means (18) is in the undeformed state, the sealing ring (56) is in the release position and, when the clamping means (18) is in the clamping position, the sealing ring (56) is deformed by the sensor receptacle (12), the clamping means (18) and the sensor (20) inserted into the sensor receptacle (12) and completely fills the seal receiving space (50).

11. A sensor fixing assembly according to any one of the preceding claims,
**characterised in that** the internal diameter of the sealing ring (56) is greater in the undeformed state than the external diameter of a portion of the sensor (20) passing through the sealing ring (56).

12. A sensor fixing assembly according to any one of the preceding claims,
**characterised in that** the clamping means (18) is provided in its end region (66) close to the sensor receiving opening with a limit stop (68) for resting against a mating limit stop (70) firmly connected with the sensor receptacle (12).

13. A sensor fixing assembly according to claim 12,
**characterised in that** the limit stop of the clamping means (18) is formed by a separate, in particular annular element (114), which is connected, preferably detachably and/or axially displaceably, with the end region (66) of the clamping means (18) close to the sensor receiving opening.

14. A sensor fixing assembly according to claim 13,
**characterised in that** the annular element (114) is provided at its end close to the sensor receiving opening with a radially inwardly protruding, preferably annular projection (116), which holds the sealing ring (56) to be arranged in the sealing space (50) captively on the clamping means (18) and/or **in that** the annular element (114) is provided in its end region close to the sensor receiving opening on its radially inwardly directed side with an annular radial depression for accommodating a radially outer region of the sealing ring (56).

15. A sensor fixing assembly according to any one of the preceding claims,
**characterised in that** the sensor receptacle (12) is connected integrally with a wall (84) of a container (86) surrounding the measurement point, in particular is formed of the wall (84) thereof.

## Revendications

1. Agencement de fixation de capteur, comprenant:
- un logement de capteur (12) destiné à contenir et à guider un capteur (20), qui forme un canal de logement de capteur (16) s'étendant dans une direction axiale (A) et conduisant à une ouverture du logement de capteur (14),
- un capteur (20) insérable dans l'ouverture du logement de capteur (14),
- un moyen de serrage (18), qui est déplaçable entre une position de serrage et une position de desserrage, dans lequel le logement de capteur (12), le moyen de serrage (18) et un capteur (20) insérable dans le logement de capteur (12) définissent, dans l'état monté terminé de l'agencement de fixation de capteur (10), une chambre de réception de joint (50) entourant radialement à l'extérieur le capteur (20), avec une section (52), plus proche de l'ouverture du logement de capteur, présentant une plus petite largeur de fente radiale, et avec une section (54), plus éloignée de l'ouverture du logement de capteur, présentant une plus grande largeur de fente radiale,
- ainsi qu'un joint torique (56), déformable par le moyen de serrage (18), qui est disposé dans la chambre de réception de joint (50), et qui s'étend plus loin dans la section (52) plus proche de l'ouverture du logement de capteur lorsque le moyen de serrage (18) se trouve dans la position de serrage que lorsque le moyen de serrage (18) se trouve dans la position de desserrage,- dans lequel le moyen de serrage (18) peut être mis en prise avec un dispositif de serrage séparé (46), par lequel l'élément de serrage (18) peut être déplacé de la position de desserrage à la position de serrage,
**caractérisé en ce que**
un composant constitué du moyen de serrage (18) et du logement de capteur (12) présente un moyen de retenue (34) qui, en coopération avec un moyen de retenue opposé (42) ou une face de friction (94) formé(e) respectivement sur l'autre composant, retient le moyen de serrage (18), de préférence de façon séparable, de manière imperdable sur le logement de capteur (12) dans la position de desserrage.

2. Agencement de fixation de capteur selon la revendication 1, **caractérisé en ce que** le moyen de retenue (90) destiné à l'engagement par friction avec la face de friction (94) est formé par un élément de retenue annulaire, de préférence élastique (90).

3. Agencement de fixation de capteur selon la revendication 1, **caractérisé en ce qu'**un composant constitué du moyen de serrage (18) et du logement de capteur (12) est muni d'un élément de retenue élastique (34) saillant en direction radiale en guise de moyen de retenue pour l'engagement par encliquetage dans un creux radial (42) formé respectivement dans l'autre composant, de préférence prolongé en direction axiale, en guise de moyen de retenue opposé.

4. Agencement de fixation de capteur selon l'une quelconque des revendications précédentes, **caractérisé en ce que** le dispositif de serrage (46) est porté par le capteur (20).

5. Agencement de fixation de capteur selon l'une quelconque des revendications précédentes, **caractérisé en ce que** le dispositif de serrage (46) comprend une butée (48) déplaçable en bloc avec le capteur (20), de préférence axialement, qui peut être mise en prise avec une contre-butée (44) prévue sur le moyen de serrage (18) et/ou **en ce que** le capteur (20) est muni, de préférence dans sa zone d'extrémité éloignée de l'ouverture du logement de capteur, d'une configuration de prise, en particulier d'un filet (76) ou d'un raccord à baïonnette, pour un engagement avec un évidement d'engagement opposé (78) formé sur le logement de capteur (12), en particulier le guide (24).

6. Agencement de fixation de capteur selon la revendication 5, **caractérisé en ce que** la configuration de prise (76) forme le dispositif de serrage.

7. Agencement de fixation de capteur selon l'une quelconque des revendications précédentes, **caractérisé en ce que** le moyen de serrage (18) est un élément tubulaire formé en une seule pièce, ou **en ce que** le moyen de serrage (18) est un élément tubulaire formé en au moins deux parties, avec une première partie tubulaire (28) plus proche de l'ouverture du logement de capteur et une deuxième partie tubulaire (30) plus éloignée de l'ouverture du logement de capteur, qui peut être amenée à butée contre une extrémité de la première partie tubulaire (28) éloignée de l'ouverture du logement de capteur.

8. Agencement de fixation de capteur selon la revendication 7, **caractérisé en ce que** le moyen de serrage (18) et le logement de capteur (12) sont formés en utilisant le même matériau avec un même coefficient de dilatation thermique, en particulier un métal.

9. Agencement de fixation de capteur selon l'une quelconque des revendications précédentes, **caractérisé en ce que** la section (54) plus éloignée de l'ouverture du logement de capteur et la section (52) plus proche de l'ouverture du logement de capteur de la chambre de réception de joint (50) se prolongent mutuellement en formant un gradin radial (58) lorsque l'on s'approche de l'ouverture du logement de capteur (14).

10. Agencement de fixation de capteur selon l'une quelconque des revendications précédentes, **caractérisé en ce que** le joint torique (56) se trouve à l'état non déformé lorsque le moyen de serrage (18) se trouve dans la position de desserrage et il est déformé par le logement de capteur (12), le moyen de serrage (18) et le capteur (20) inséré dans le logement de capteur (12) et il remplit entièrement la chambre de réception de joint (50) lorsque le moyen de serrage (18) se trouve dans la position de serrage.

11. Agencement de fixation de capteur selon l'une quelconque des revendications précédentes, **caractérisé en ce que** le diamètre intérieur du joint torique (56) à l'état non déformé est plus grand que le diamètre extérieur d'une section du capteur (20) se déplaçant à travers le joint torique (56).

12. Agencement de fixation de capteur selon l'une quelconque des revendications précédentes, **caractérisé en ce que** le moyen de serrage (18) est muni, dans sa zone d'extrémité (66) proche de l'ouverture du logement de capteur, d'une butée (68) destinée à l'appui contre une contre-butée (70) solidaire du logement de capteur (12).

13. Agencement de fixation de capteur selon la revendication 12, **caractérisé en ce que** la butée du moyen de serrage (18) est formée par un élément séparé (114), en particulier annulaire, qui est relié, de préférence de façon séparable et/ou de façon déplaçable en direction axiale, à la zone d'extrémité (66) du moyen de serrage (18) proche de l'ouverture du logement de capteur.

14. Agencement de fixation de capteur selon la revendication 13, **caractérisé en ce que** l'élément annulaire (114) est muni, à son extrémité proche de l'ouverture du logement de capteur, d'une saillie (116), de préférence annulaire, saillante radialement vers l'intérieur, qui retient le joint torique (56) à disposer dans la chambre de réception de joint (50) de façon imperdable sur le moyen de serrage (18) et/ou **en ce que** l'élément annulaire (114) est muni, dans sa zone d'extrémité proche de l'ouverture du logement de capteur, sur son côté orienté radialement vers l'intérieur, d'un creux radial annulaire destiné à recevoir une région radialement extérieure du joint torique (56).

15. Agencement de fixation de capteur selon l'une quelconque des revendications précédentes, **caractérisé en ce que** le logement de capteur (12) est relié intégralement à une paroi (84) d'une enceinte (86) entourant le point de mesure, en particulier, est formé par la paroi (84) de celle-ci.
